# EUROPEAN PATENT SPECIFICATION

(11) **EP 1 129 912 B1**
(45) Date of publication and mention of the grant of the patent: **09.11.2005**
(21) Application number: 00112134.2
(22) Date of filing: 06.06.2000
(51) Int. Cl.: B60R 25/02, B60R 25/00, F16H 59/10

(54) **Electromagnetic locking device, particularly for the ignition switch or ignition lock of motor vehicles**
Elektromagnetische Sperrvorrichtung, insbesondere für einen Zündschalter oder ein Zündschloss eines Kraftfahrzeuges
Dispositif électromagnetique de verrouillage, notamment pour le contacteur ou la serrure d'allumage d'un véhicule à moteur

(30) Priority: 02.03.2000 DE 10010277
(43) Date of publication of application: 05.09.2001
(73) Proprietor: Methode Electronics Malta Ltd., Mriehel QRM 09 (MT)
(72) Inventor: Muscat, Mark, Mosta (MT)
(74) Representative: Haft, von Puttkamer, Berngruber, Czybulka

(56) References cited:
- WO-A-98/03375
- DE-A- 19 737 741
- US-A- 1 541 021
- US-A- 5 014 038
- US-A- 5 685 183

## Description

The invention relates to an electromagnetic locking device, particularly for the ignition switch or ignition lock of motor vehicles, with an electromagnetically-actuated locking plunger, formed as the armature of a lift magnet or a solenoid and arranged on the periphery of the rotor of an ignition switch, of the connecting shaft or of the locking cylinder of an ignition lock for an essentially radial-engagement with a cam on the periphery of the rotor, of the shaft or of the locking cylinder, wherein the cam is formed as a slide piece which can move transverse to the longitudinal axis of the rotor of the shaft or of the locking cylinder and is guided in a recess on the periphery of the rotor, of the shaft or the locking cylinder and can be displaced outwards under the pressure of a spring.

For motor vehicles with automatic transmission there is problem if the ignition key can be withdrawn from the ignition lock without the selector lever of the automatic transmission having been set to the park position. To avoid the dangers associated with this, electromagnetically-actuated locking bolts have been introduced into the ignition switch or ignition lock barrel, which prevent the driver from leaving the vehicle, i.e. withdrawing the ignition key, without having already set the selector lever to the park position. When the vehicle is moving and the selector lever or gear lever is not in the park position, the solenoid or lift magnet is energized and the locking bolt or locking plunger is moved into a recess on the rotor of the ignition switch or of the locking cylinder or one of the shafts connecting the locking cylinder and ignition switch, so that the ignition key cannot then be rotated to the withdrawal position.

When the power for the ignition switch is switched off, the armature of the solenoid or lift magnet with the attached locking plunger is pushed back to its starting position by a helical compression spring. This is, however, problematic in that the force of the compression spring very often is not sufficient to withdraw the solenoid or lift magnet with the attached locking plunger from the recess on the periphery of the rotor, of the connecting shaft or of the locking cylinder when the power is switched off.

A main problem with the known devices is also the friction between the locking plunger and rotor and also between the locking plunger and its guide on the solenoid or lift magnet. The friction between these two parts results in a cling effect which holds the locking plunger with the armature firmly in the locking position in the recess of the rotor, of the shaft or of the locking cylinder and thus prevents the ignition key from being turned to the withdrawal position even if the transmission selector lever has already been set to park. The driver can then only withdraw the ignition key by using force to move the ignition key or the ignition lock to the withdrawal position.

This problem could, of course, be solved by using a stronger spring, which would, however, require a larger solenoid and therefore create an additional problem of space with regard to accommodating the ignition switch with the solenoid or lift magnet for the locking device.

US-A-5685183 shows a key interlocking mechanism with the features of the precharacterizing part of claim 1.

Object of the invention is to avoid the aforementioned problems by a device which by simple and functionally-safe technical means is designed such that the locking plunger of the solenoid or lift magnet can be withdrawn reliably and safely from engagement with the locking cam on the periphery of the rotor, or the connecting shaft or of the locking cylinder after the electric circuit is switched off.

This problem is solved in the first instance by the invention in that the cam is designed as a slide piece which can move transverse to the longitudinal axis of the rotor, of the shaft or of the locking cylinder and is guided in a recess on the periphery of the rotor, of the shaft or of the locking cylinder and displaced outwards under the pressure of a spring.

Particularly advantageous further embodiments of the invention are identified in claims 2 to 8.

In this way, it is guaranteed that the locking plunger of the solenoid or lift magnet can not stick in the recess on the periphery of the rotor of the shaft or of the locking cylinder, and also not in the guide sleeve at the solenoid or the magnet coil of the lift magnet. Because the cam is designed as a spring-loaded slide piece which is displaceably guided transverse to the longitudinal axis of the rotor, of the shaft or of the locking cylinder in a recess on the periphery of the rotor, of the shaft or of the locking cylinder and is pushed outwards by the pressure of a spring, the retaining force of the lift magnet is reliably overcome after the power is switched off and the armature with the locking plunger is securely withdrawn from the locking position to the starting position.

For the method of functioning of the locking device, it is in this case of particular advantage if the slide piece has a starting slope at the front end in the direction of rotation of the rotor, of the shaft or of the locking cylinder, for the locking plunger of the magnet coil or solenoid, which blends into a radial stop face for the locking plunger.

Of particular advantage for the proper functioning of the locking device is, furthermore, that the longitudinal axis of the slide piece with the radial stop face for the locking plunger is inclined at an angle "X" a few degrees rearwards relative to the radius of the rotor. In this way, the cling effect when retracting the locking plunger to the release position is avoided by simple means.

The proper functioning of the locking device is also aided in that the recess for the slide piece has a lead-in slope with a curved form, the rearward edge oh which is, when the slide piece is fully depressed, opposite the beginning of the starting slope at an approximately equal radial distance from the rotational axis of the rotor, of the shaft or of the lock cylinder.

The functional safety of the device is still further increased by a further advantageous feature, in that the slide piece is arranged in the recess secured against twisting between parallel opposing tongue and groove guides.

Furthermore, a very high retentive force in the locking position of the locking plunger is achieved in that the solenoid or lift magnet has a tubular guide sleeve with a stop face for the armature, which, the same as the armature is also made of a ferromagnetic material and comes into metal-to-metal contact with the armature when the locking plunger is in the locking position, so that the holding force of the solenoid or lift magnet in the locking position is amplified by a multiple of the normal magnetic force.

Finally, a particularly space-saving construction of the locking device is achieved in that the guide sleeve for the locking plunger has a cylindrical cutout for a return spring which surrounds the locking plunger and engages on the underside of the armature.

A preferred embodiment of the invention is schematically shown in the drawings.
- Fig. 1: is a locking device in accordance with the invention in a first position before the locking plunger engages in a recess on the rotor of an ignition switch or on the periphery of a lock cylinder or of a connecting shaft between the locking cylinder and ignition switch.
- Fig. 2: is the locking device in a second position as the locking plunger engages in the recess after a further rotation of the rotor, of the connecting shaft or of the locking cylinder, and
- Fig. 3: is the locking device in a third position in which the locking plunger of the solenoid or of the armature has again been released from the locking position shown in Fig. 2.

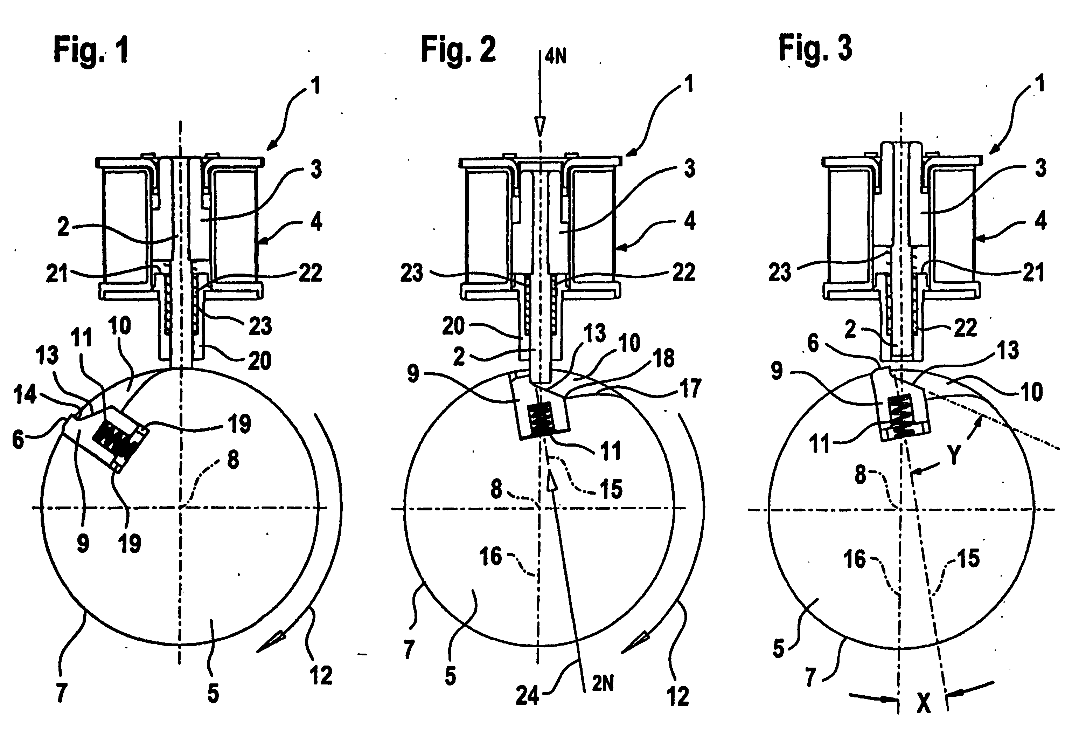

Fig. 1 to Fig. 3 show an electromagnetic locking device 1, which is particularly suitable for the ignition switch or the ignition lock of motor vehicles. The locking device 1 has an electromagnetically-actuated locking plunger 2, which is formed as the armature 3 of a lift magnet or solenoid 4 and is arranged on the periphery of the rotor 5 of an ignition switch or the shaft or locking cylinder of an ignition lock for an essentially radial engagement with a cam, cog or tappet 6 on the periphery 7 of the rotor 5 or of the shaft the locking cylinder.

As can be seen in the drawing, the cam 6 is designed as a slide piece 9 which can move transverse to the longitudinal axis 8 of the rotor 5, of the shaft or of the locking cylinder and is guided in a recess 10 on the periphery of the rotor 9, of the shaft or the locking cylinder and can be displaced outwards under the pressure of a spring 11.

The slide piece 9 has, in the direction of rotation 12 of the rotor, or of the shaft or of the locking cylinder, an entry slope 13 at the front for the locking plunger 2 of the lift magnet or solenoid 4, which blends into a radial stop face 14 for the locking plunger 2. The angle of ascent "Y" of the entry slope 13 is approximately 50° to 60° transverse to the longitudinal axis 15 of the slide piece 9.

The longitudinal axis 15 of the displaceable slide piece 9 with the radial stop face 14 for the locking plunger 2 is inclined relative to the radius 16 of the rotor 5 rearwards a few degrees against the direction of rotation, preferably at an angle "X" of approximately 10°.

The recess 10 for the slide piece 9 on the periphery 7 of the rotor 5 of the shaft or of the locking cylinder also has a lead-in slope 17 with a curved form whose rearward edge 18 is, when the slide piece 9 is fully depressed, opposite the start of the starting slope 13 at an approximately equal radial distance from the rotational axis 8 of the rotor 5 or of the shaft or of the locking cylinder (Fig. 2). The sliding piece 9 is arranged in the recess 10 secured against twisting between parallel opposing tongue and groove guides 19.

The solenoid or lift magnet 4 is arranged radially relative to the rotational axis 8 of the rotor 5 of the connecting shaft or of the locking cylinder and has a tubular guide sleeve 20 with a stop face 21 for the armature 3, which, like the armature 3, is also made of a ferromagnetic material. When the locking plunger 2 (Fig. 2) is in the locked position, the armature 3 comes into metal-to-metal contact with the guide sleeve 20,21, so that holding force of the solenoid or of the lift magnet 4 in the locked position is amplified by a multiple of the normal magnetic force.

The guide sleeve 20 for the locking plunger 2 has a cylindrical cutout 22 for a return spring 23 which surrounds the locking plunger 2 and engages on the underside of the armature 3.

By means of the locking device 1 in accordance with the invention, an important property of solenoids or magnetic coils is utilized. The forces generated by a solenoid or a lift magnet 4 reach very high values if the air gap between two matched parts is reduced to zero. The solution can be applied to various situations in the field of the design of ignition switches, both on the rotor and on the lock barrel.

If the rotor 5 of the ignition switch or the shaft between the ignition lock and ignition switch is rotated to the locking position shown in Fig. 2, the locking plunger 2 of the energized solenoid 4 extends fully until the matching parts of the armature 3 and guide sleeve 20 for the locking plunger 2 come into mutual metal-to-metal contact and the magnetic holding force increases extraordinarily, for example to a value of 4N. This is shown in Fig. 1 and 2. When the rotor 5 or the shaft is then rotated a few degrees, the slide piece 9 with the cam 6 is pushed downwards by the locking plunger 2 of the solenoid 4, because the compression spring 11 of the slide piece 9 generated a spring force, for example of only about 2N, which is less than the holding force of the solenoid which pushes outwards the locking plunger 2 as shown in Fig. 2.

If the power supply to the solenoid or lift magnet is interrupted, the spring-loaded slide piece 9 pushes back the locking plunger 2 or locking armature of the solenoid 4. The direction of pressure 24 of the slide piece 4 with the tappet 6 is at an oblique angle "X" relative to the axis 15 of the slide piece 9. The oblique or diagonal compressive movement generates the necessary play between the tappet or the cam 6 and the locking plunger 2 so that the locking plunger 2 can be fully withdrawn and returned to its starting position as shown in Fig. 3.

### List of reference numbers

- 1: electromagnetic locking device
- 2: locking plunger, locking pin
- 3: armature
- 4: lift magnet, solenoid
- 5: rotor, connecting shaft or locking cylinder
- 6: cam, cog, tappet
- 7: periphery
- 8: longitudinal axis, rotational axis of rotor 5
- 9: slide piece
- 10: recess
- 11: spring
- 12: direction of rotation
- 13: entry slope
- 14: radial stop face
- 15: longitudinal axis of slide piece 9
- 16: radius of rotor 5
- 17: lead-in slope
- 18: back edge
- 19: tongue and groove guides
- 20: guide sleeve
- 21: stop face
- 22: cylindrical cutout
- 23: return spring
- 24: direction of pressure
- "X": angle
- "Y": angle

## Claims

1. Electromagnetic locking device, particularly for the ignition switch or ignition lock of motor vehicles, with an electromagnetically-actuated locking plunger (2), formed as the armature (3) of a lift magnet (4) or a solenoid and arranged on the periphery (7) of the rotor (5) of an ignition switch, of the connecting shaft or of the locking cylinder of an ignition lock for an essentially-radial engagement with a cam (6) on the periphery of the rotor, of the shaft or of the locking cylinder, wherein the cam (6) is formed as a slide piece (9) which can move transverse to the longitudinal axis (8) of the rotor (5) of the shaft or of the locking cylinder and is guided in a recess (10) on the periphery (7) of the rotor, of the shaft or the locking cylinder and can be displaced outwards under the pressure of a spring (11), **characterized in that** the slide piece (9) has a starting slope (13) at the front end in the direction of rotation (12) of the rotor (5), of the shaft or of the locking cylinder, for the locking plunger (2) of the lift magnet (4) or of the solenoid which blends into a radial stop face (14) for the locking plunger (2).

2. Locking device according to claim 1, **characterized in that** the entry slope (13) is inclined at an angle "Y" of about 50 to 60 degrees relative to the longitudinal axis (15) of the slide piece (9).

3. Locking device according to one of claims 1 or 2, **characterized in that** the longitudinal axis (15) of the slide piece (9) with the radial stop face (14) for the locking plunger (2) is inclined relative to the radius (16) of the rotor (5) rearwards a few degrees against the direction of rotation at an angle "X".

4. Locking device according to one of claims 1 to 3, **characterized in that** the recess (10) for the slide piece (9) has a lead-in slope (17) with a curved form whose rearward edge (18) is, when the slide piece (9) is fully depressed, opposite the start of the starting slope (13) at an approximately equal radial distance from the rotation axis (8) of the rotor (5), of the shaft or of the locking cylinder.

5. Locking device according to one of claim 1 to 4, **characterized in that** the slide piece (9) is arranged in a recess (10) secured against twisting between parallel opposing tongue and groove guides (19).

6. Locking device according to one of claims 1 to 5, **characterized in that** the solenoid or lift magnet (4) has a tubular guide sleeve (20) with a stop face (21) for the armature (3), which, like the armature (3), is also made of a ferromagnetic material and comes into metal-to-metal contact with the armature (3) when the locking plunger (2) is in the locking position, so that the holding force of the solenoid or lift magnet (4) in the locking position is amplified by a multiple of the normal magnetic force.

7. Locking device according to claim 6, **characterized in that** the guide sleeve (20) for the locking plunger (2) has a cylindrical cutout (22) for a return (23) which surrounds the locking plunger (2) and engages on the under side of the armature.

## Patentansprüche

1. Elektromagnetische Sperrvorrichtung, insbesondere für den Zündschalter oder das Zündschloss von Kraftfahrzeugen, mit einem elektromagnetisch betätigten Sperrstößel (2), der als Anker (3) eines Hubmagneten (4) oder eines Solenoids ausgebildet und am Umfang (7) des Rotors (5) eines Zündschalters, der Verbindungswelle oder des Schließzylinders eines Zündschlosses für einen im Wesentlichen radialen Eingriff mit einem Nocken (6) am Umfang des Rotors, der Welle oder des Schließzylinders angeordnet ist, wobei der Nocken (6) als ein Gleitstück (9) ausgebildet ist, das sich quer zur Längsachse (8) des Rotors (5, der Welle oder des Schließzylinders bewegen kann und in einer Vertiefung (10) am Umfang (7) des Rotors, der Welle oder des Schließzylinders geführt ist und unter Druck einer Feder (11) nach außen verschoben werden kann, **dadurch gekennzeichnet, dass** das Gleitstück (9) in der Richtung der Drehung (12) des Rotors (5), der Welle oder des Schließzylinders am vorderen Ende eine Anfangsschräge (13) für den Sperrstößel (2) des Hubmagneten (4) oder des Solenoids aufweist, die in eine radiale Anschlagfläche (14) für den Sperrstößel (2) übergeht.

2. Sperrvorrichtung nach Anspruch 1, **dadurch gekennzeichnet, dass** die Anfangsschräge (13) unter einem Winkel "Y" von etwa 50° bis 60° in Bezug auf die Längsachse (15) des Gleitstückes (9) geneigt ist.

3. Sperrvorrichtung nach Anspruch 1 oder 2, **dadurch gekennzeichnet, dass** die Längsachse (15) des Gleitstückes (9) mit der radialen Anschlagfläche (14) für den Sperrstößel (2) relativ zum Radius (16) des Rotors (5) entgegen der Drehrichtung unter einem Winkel "X" von wenigen Graden nach hinten geneigt ist.

4. Sperrvorrichtung nach einem der Ansprüche 1 bis 3, **dadurch gekennzeichnet, dass** die Vertiefung (10) für das Gleitstück (9) eine Einlaufschräge (17) mit einem kurvenförmigen Verlauf aufweist, deren rückwärtige Kante (18) bei vollständig niedergedrücktem Gleitstück (9) dem Anfang der Anfangsschräge (13) etwa in einem gleichen radialen Abstand von der Drehachse (8) des Rotors (5), der Welle oder des Schließzylinders gegenüberliegt.

5. Sperrvorrichtung nach einem der Ansprüche 1 bis 4, **dadurch gekennzeichnet, dass** das Gleitstück (9) in einer Vertiefung (10) zwischen einander parallel gegenüberliegenden Zungen und Nutführungen (19) verdrehungssicher angeordnet ist.

6. Sperrvorrichtung nach einem der Ansprüche 1 bis 5, **dadurch gekennzeichnet, dass** der Solenoid oder der Hubmagnet (4) eine rohrförmige Führungsbuchse (20) mit einer Anschlagfläche (21) für den Anker (3) aufweist, die, ebenso wie der Anker (3) aus einem ferromagnetischen Material besteht, und in metallische Berührung mit dem Anker (3) gelangt, wenn der Sperrstößel (2) sich in der Sperrstellung befindet, so dass die Haltekraft des Solenoids oder des Hubmagneten (4) in der Sperrstellung um ein Vielfaches der normalen magnetischen Kraft verstärkt wird.

7. Sperrvorrichtung nach Anspruch 6 , **dadurch gekennzeichnet, dass** die Führungsbuchse (20) für den Sperrstößel (2) eine zylindrische Aussparung (22) für eine Rückstellfeder (23) aufweist, die den Sperrstößel (2) umgibt und an der unteren Seite des Ankers angreift.

## Revendications

1. Dispositif de verrouillage électromagnétique, en particulier pour le commutateur d'allumage ou le coupe-circuit d'allumage de véhicules à moteur, avec un piston de verrouillage actionné de manière électromagnétique (2), formant l'armature (3) d'un aimant de levage (4) ou d'un électroaimant et placé sur la périphérie (7) du rotor (5) d'un commutateur d'allumage, de l'arbre de transmission ou du cylindre de verrouillage d'un coupe-circuit d'allumage pour un engagement essentiellement radial avec une came (6) sur la périphérie du rotor, de l'arbre ou du cylindre de verrouillage, la came (6) se présentant sous la forme d'une pièce glissante (9) qui peut se déplacer transversalement à l'axe longitudinal (8) du rotor (5) de l'arbre ou du cylindre de verrouillage et est guidée dans un évidement (10) pratiqué sur la périphérie (7) du rotor, de l'arbre ou du cylindre de verrouillage et qui peut être déplacée vers l'extérieur sous la pression d'un ressort (11), **caractérisé en ce que** la pièce glissante (9) a une pente de démarrage (13) à l'extrémité avant dans le sens de rotation (12) du rotor (5), de l'arbre ou du cylindre de verrouillage, pour le piston de verrouillage (2) de l'aimant de levage (4) ou de l'électroaimant qui se termine par une face d'arrêt radiale (14) pour le piston de verrouillage (2).

2. Dispositif de verrouillage selon la revendication 1, **caractérisé en ce que** la pente d'entrée (13) est inclinée selon un angle "Y" d'environ 50 à 60 degrés par rapport à l'axe longitudinal (15) de la pièce glissante (9).

3. Dispositif de verrouillage selon l'une des revendications 1 et 2, **caractérisé en ce que** l'axe longitudinal (15) de la pièce glissante (9) munie de la face d'arrêt radiale (14) pour le piston de verrouillage (2) est incliné par rapport au rayon (16) du rotor (5) vers l'arrière de quelques degrés dans le sens inverse de la rotation selon un angle "X".

4. Dispositif de verrouillage selon l'une des revendications 1 à 3, **caractérisé en ce que** l'évidement (10) pour la pièce glissante (9) comporte une pente d'amenée (17) de forme courbée, dont le bord arrière (18) se trouve, lorsque la pièce glissante (9) est entièrement abaissée, en face du début de la pente de démarrage (13) à une distance radiale approximativement égale par rapport à l'axe de rotation (8) du rotor (5), de l'arbre ou du cylindre de verrouillage.

5. Dispositif de verrouillage selon l'une des revendications 1 à 4, **caractérisé en ce que** la pièce glissante (9) est placée dans un évidement (10), immobilisée en torsion entre une languette et des rainures de guidage (19) parallèles et opposées.

6. Dispositif de verrouillage selon l'une des revendications 1 à 5, **caractérisé en ce que** l'électroaimant ou aimant de levage (4) comporte un manchon de guidage tubulaire (20) muni d'une face d'arrêt (21) pour l'armature (3) qui, comme l'armature (3), est faite d'un matériau ferromagnétique et vient en contact métal contre métal avec l'armature (3) lorsque le piston de verrouillage (2) est dans la position de verrouillage, de sorte que la force de maintien de l'électroaimant ou aimant de levage (4) dans la position de verrouillage est amplifiée par un multiple de la force magnétique normale.

7. Dispositif de verrouillage selon la revendication 6, **caractérisé en ce que** le manchon de guidage (20) pour le piston de verrouillage (2) comporte une entaille cylindrique (22) pour un ressort de rappel (23) qui entoure le piston de verrouillage (2) et qui prend appui sur la face inférieure de l'armature.
